# EUROPÄISCHE PATENTSCHRIFT

(11) **EP 0 547 473 B1**
(45) Veröffentlichungstag und Bekanntmachung des Hinweises auf die Patenterteilung: **07.02.1996**
(21) Anmeldenummer: 92120880.7
(22) Anmeldetag: 08.12.1992
(51) Int. Cl.: H02G 5/06

(54) **Verfahren zur Montage von vertikal angeordneten Schienenabscnitten von Schienenverteilern und Stützvorrichtung hierfür**
Method for mounting vertically disposed bus-bar sections of current distributors and a supporting device therefor
Méthode pour le montage d'une section disposée verticalement de barres omnibus de répartiteurs et dispositif de support pour celle-ci

(30) Priorität: 17.12.1991 DE 4141589
(43) Veröffentlichungstag der Anmeldung: 23.06.1993
(73) Patentinhaber: Klöckner-Moeller GmbH, D-53115 Bonn (DE)
(72) Erfinder: Ludwig, Walter, Dipl.-Ing., W-5423 Braubach (DE); Wegner, Arthur, Dipl.-Ing., W-5200 Siegburg (DE); Ammann, Eckhard, Dipl.-Ing., W-5206 Seelscheid (DE)

(56) Entgegenhaltungen:
- US-A- 2 840 630
- US-A- 2 998 951
- US-A- 4 097 103

## Beschreibung

Die Erfindung betrifft eine Stützvorrichtung zur Abstützung von vertikal angeordneten Schienenabschnitten von Schienenverteilern, insbesondere Niederspannungs-Schienenverteilern nach dem Oberbegriff des Anspruches 1.

In der Energieverteilung sind Stromschienensysteme, auch Schienenverteiler genannt, zum Transport und zur Verteilung elektrischer Energie seit langem bekannt und bewährt.

Eine typische Aufgabe dieser Schienensysteme ist die Versorgung von Hochhausetagen mit elektrischer Energie.

Der technische und wirtschaftliche Vorteil von Schienenverteilern wird bei Hochhäusern besonders deutlich. Anstatt für jedes Stockwerk ein Einzelkabel zu projektieren und zu verlegen, wird für das gesamte Bauwerk nur ein Schienenstrang installiert.

Der Schienenkanal wird mittels Führungs- und Stützelementen an einer Wand oder an den Durchbruchstellen des Etagenbodens festgelegt.

Eine Stützvorrichtung der eingangs genannten Art ist in der Telemecanique-Firmenschrift "Canalis-Schienenverteiler, 25 ... 6300 A, 1991, LO11 TE, Seite 4/74" gezeigt. Dort sind hakenartige Flansche mit dem Schienengehäuse verbunden, die an einem U-förmigen Bügel aufgehängt werden. Dieser Bügel ist an den Enden mit Trägerelementen festgelegt, die an der Gebäudewand befestigt sind.

Bei der Montage einer derartigen Steigleitung tritt das Problem auf, daß die unteren Stützvorrichtungen mit zunehmender Schienenlänge immer höher belastet und beansprucht werden.

Bekannt ist eine in der Firmendruckschrift "Schienenverteiler 8Pl aus Isolierstoff, schutzisoliert", Siemens AG, Bestell-Nr.: E 22V/2007 gezeigte Stützvorrichtung, die erst bei der Montage dort angebracht wird wo es erforderlich ist.
Durch die gewichtsarme Isolierstoffkapselung sind keine Maßnahmen erforderlich, die eine wachsende Belastung der Stützvorrichtung verhindern.

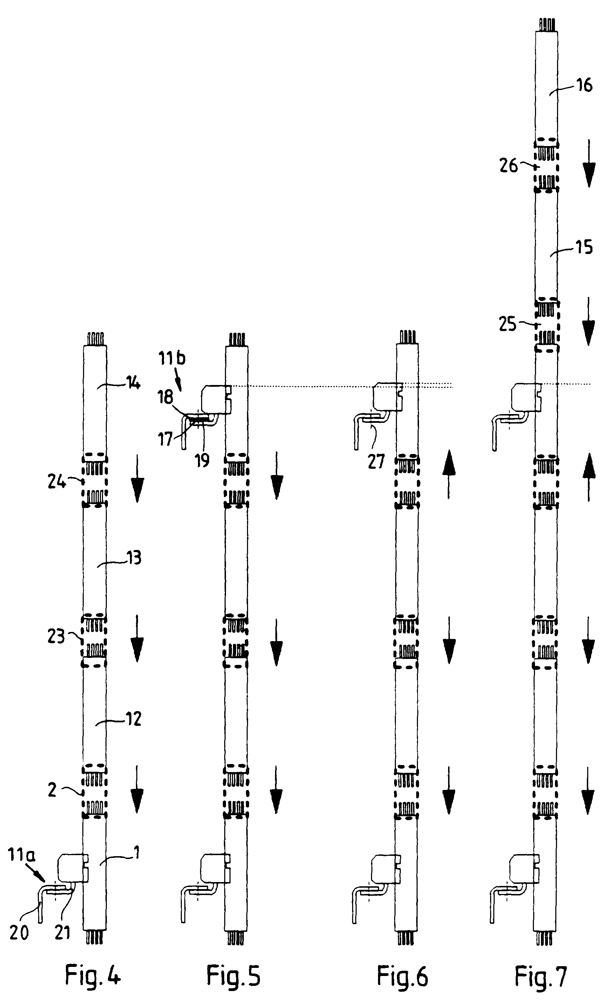

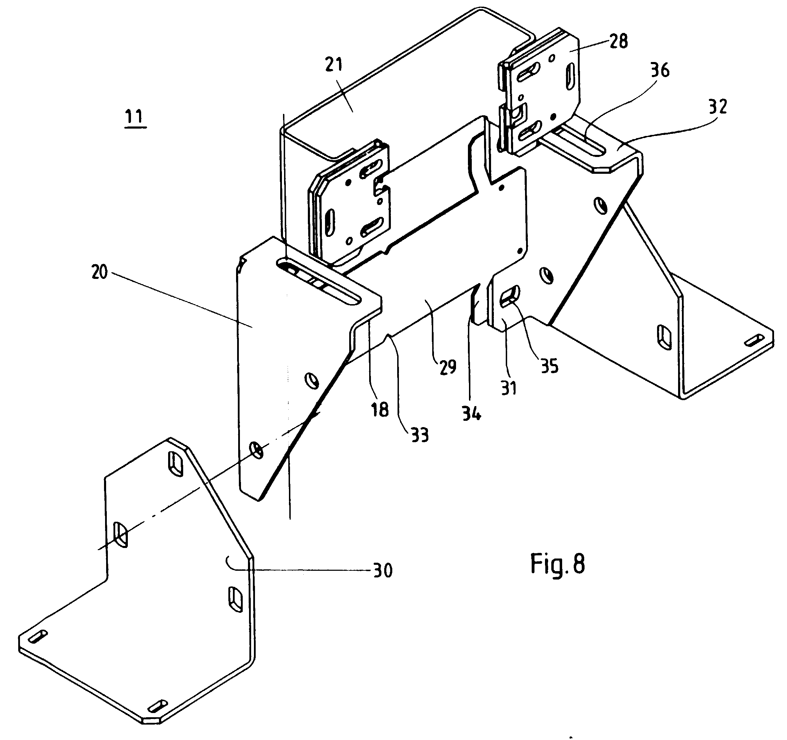

Eine in der US-PS 32 26 472 gezeigte Stützvorrichtung (Fig. 8) weist an Winkeln angeordnete Befestigungsschrauben auf, die sich gegen die Bodenfläche direkt abstützen. Hierdurch ist zwar eine justierbare Abstützung möglich, eine gleichmäßige Einstellung der Stützvorrichtungen ist hier allerdings schwierig. Verbessert kann dies durch die Verwendung von Federn, wie in der gleichen Schrift gezeigt ist (Fig. 7).

Eine andere Stützvorichtung, die ebenfalls gegen dieses Problem Abhilfe schafft, ist in der Westinghouse-Firmenschrift (US) "Pow-R-Way Busway Systems, 1986, Nr.30-560, Seite 22" gezeigt. Der Schienenkanal ist an den Stützstellen federnd gelagert. Hierbei stützen sich die Federn an den mit dem Schienengehäuse festgeschraubten Flanschen ab. Die Federn können durch Muttern entsprechend des zu tragenden Gewichts eingestellt werden, so daß eine gleichmäßige Aufteilung der Kräfte in den Stützvorrichtungen eintritt. Hierbei tritt das Problem auf, daß die Einstellung der Federn schwierig und die Federn teuer sind.

Die Trägerelemente können als U-Profile ausgeführt sein, die sich federnd an den Etagenboden abstützen, wie in der Kyodo-Firmenschrift (JP) "Kyodo L-S Type Bus Duct System 400 A - 5000 A, Nr. LS-838E, Seiten 8 und 20" gezeigt ist oder als winkelförmige Träger zur Wandbefestigung ausgeführt sein, ebenfalls mit Federn, wie in der CIAMA-Firmenschrift (ES) "Nr. 66354001, letzte Seite" gezeigt ist.

Eine nach dem Feder-Prinzip arbeitende Stützvorrichtung ist ferner noch in der Square D-Firmenschrift (US) "I-Line Plug-in Busway 225-600 Ampere, August 1986, Nr. 5610, Seite 13" gezeigt.

Aus der GB 21 89 070 A ist eine weitere Stützvorrichtung bekannt, die aus zwei miteinander verschraubbaren Hälften besteht, die sowohl mit den Schienenabschnitten als auch beispielsweise einer Wand verschraubt werden kann.

Weiterhin sind aus der US-PS 33 76 377 und der DE 35 02 864 Verbindungsstellen an Schienenverteilern bekannt, die bei loser Fixierung ein Bewegungsspiel in Längsrichtung des Schienenverteilers gestatten.

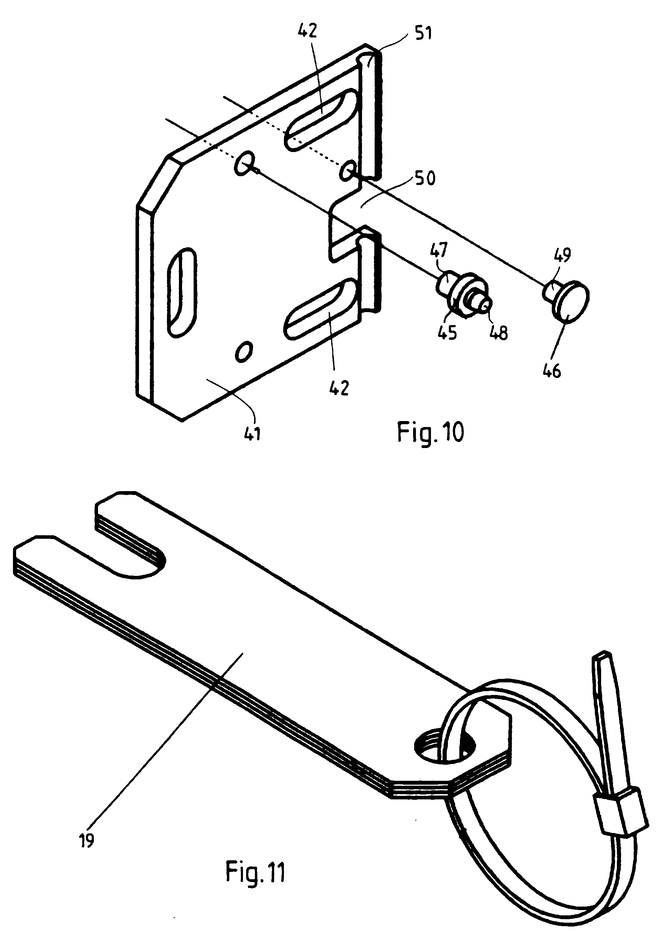

Die aus der DE 35 02 864 bekanntgewordene Verbindungsstelle weist Flansche bzw. eine Haube auf (Bezugszeichen 41) und verbindet mittels Verbindungsschrauben die zwei Schienenabschnitte mechanisch miteinander (Fig. 10). Die Bohrungen, die an den Flanschen angeordnet sind und die mit den Verbindungsschrauben korrespondieren, sind etwas größer als der Durchmesser der Verbindungsschrauben, wodurch ein Bewegungsspiel vorhanden ist.

Aus der DE-PS 35 02 864 ist es bekannt die miteinander verbundenen Gehäuseteile, bzw. spiegelasymmetrisch angeordneten Schienengehäusehälften, mit einem Formschluß in Längsrichtung zu versehen, um eine Längsverschiebung der beiden Gehäuseteile des Schienenverteilers zu vermeiden.

Eine Entkopplung von Schienenabschnitten ist jedoch bei dem bekannten Stand der Technik jedoch nicht gegeben.

Aufgabe der Erfindung ist es deshalb, eine Stützvorrichtung zur Abstützung von vertikal angeordneten Schienenabschnitten von Schienenverteilern, insbesondere Niederspannungs-Schienenverteilern nach dem Oberbegriff des Anspruches 1 zu schaffen, bei dem mit einfachen Mitteln eine Entkopplung von Schienenabschnitten erfolgt, wobei hierdurch erreicht werden soll, daß die Stützvorrichtungen gleichmäßig beansprucht werden.

Die Aufgabe der Erfindung wird durch die kennzeichnenden Merkmale des Anspruchs 1 gelöst, während in den Ansprüchen 2 bis 20 besonders vorteilhafte Weiterbildungen der Erfindung gekennzeichnet sind.

Entsprechend dem Anspruch 21 betrifft die Anmeldung auch ein Verfahren zur Montage von vertikal angeordneten Schienenabschnitten von Schienenverteilern, unter Verwendung der Stützvorrichtung gemäß einem der Ansprüche 1 bis 20.

Durch die Erfindung lassen sich Stützvorrichtungen ohne Federn einsetzen und mit einer gleichmäßigen Belastung der einzelnen Stützvorrichtungen entlang der Schienenlänge in einfacher Art und Weise erreichen.

Besonders günstig ist es, wenn die zweite Auflagefläche (17) einem mit dem Schienengehäuse (22) mittels Klemmen (28) befestigten Klemmenhalter (21) zugeordnet ist, weil ein direktes Aufschrauben oder Schweißen von Befestigungsmitteln entfällt.

Aus dem C-förmigen Klemmenhalter ergibt sich eine besonders robuste und montagefreundliche Ausgestaltung der Erfindung.

Von besonderem Vorteil ist es, wenn die Klemmen (28) mit für die Klemmung des Schienengehäuses und Befestigung an dem Klemmenhalter gemeinsamen Schrauben versehen sind, weil hierdurch Montagezeit und Befestigungsmittel erspart werden.

Besonders kostengünstig ist es, wenn die Klemmen aus zwei gleichen Klemmenhälften bestehen.

Eine einfache und montagefreundliche und dennoch tragfähige Klemme wird durch die Merkmale der Ansprüche 6 bis 9 erreicht.

Günstig ist, wenn die Teile rotationssymmetrisch ausgeführt sind, weil diese als Drehteile leicht herstellbar sind.

Im Unterschiede zum Stande der Technik kann durch die Merkmale des Anspruches 11 die Stützvorrichtung, ohne Einschränkung, entlang der gesamten Länge eines Schienenabschnittes befestigt werden, was mit einer hohen Flexibilität gleichbedeutend ist.

Damit der Abstand zwischen dem Schienenkanal und der Gebäudewand verändert werden kann, ist es vorteilhaft, daß der Winkel in einem zur Gebäudebodenebene parallelen Abschnitt ein Langloch aufweist, durch das der Klemmenhalter verschiebbar ist.

Eine erhebliche Vereinfachung der Montage wird durch eine Vormontage des Trägers, also der Winkel, der Platte und ggf. der Bodenbefestigungswinkel erreicht, die durch die Merkmale der Ansprüche 15 und 16 besonders vorteilhaft ist.

Die genaue Montage mit Hilfe eines Lotes wird in besonderer Weise durch das kennzeichnende Merkmal des Anspruches 16 hervorgerufen.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine schematische Darstellung eines Schienenabschnittes mit einer gestrichelt angedeuteten Verbindungsvorrichtung,
- Fig. 2: eine Seitenansicht des in der Fig. 1 gezeigten Schienenabschnittes, wobei die Verbindungsvorrichtung sich auf den Schienenabschnitt stützt,
- Fig. 3: eine Seitenansicht des in der Fig. 1 gezeigten Schienenabschnittes, wobei der Schienenabschnitt an der Verbindungsvorrichtung hängend angeordnet ist,
- Fig. 4: eine schematische Darstellung von vertikal angeordneten mit Verbindungsvorrichtungen verbundenen Schienenabschnitten, wobei nur der unterste mit einer Stützvorrichtung versehen ist,
- Fig. 5: eine schematische Darstellung von vertikal angeordneten mit Verbindungsvorrichtungen verbundenen Schienenabschnitten, wobei zusätzlich der oberste mit einer weiteren Stützvorrichtung mit zwischengelegten Einstellehren verbunden ist,
- Fig. 6: eine schematische Darstellung gemäß der Fig. 5 mit dem Unterschied, daß die Einstellehren entfernt worden sind und die Befestigungsschraube angezogen worden ist,
- Fig. 7: eine schematische Darstellung gemäß der Fig. 6 mit dem Unterschied, daß weitere Schienenabschnitte aufgesetzt sind,
- Fig. 8: eine perspektivische Ansicht der Stützvorrichtung,
- Fig. 9: eine perspektivische Darstellung des Klemmenhalters mit Klemmen, wobei eine Klemme auseinandergezogen dargestellt ist,
- Fig. 10: eine perspektivische Darstellung einer Klemmenhälfte mit auseinandergezogen Elementen,
- Fig. 11: eine perspektivische Darstellung der Einstellehren,
- Fig. 12: eine Schnittdarstellung des Schienengehäuses und der Stützvorrichtung und
- Fig. 13: eine Schnittdarstellung gemäß der Schnittlinie A-B in der Fig. 12.

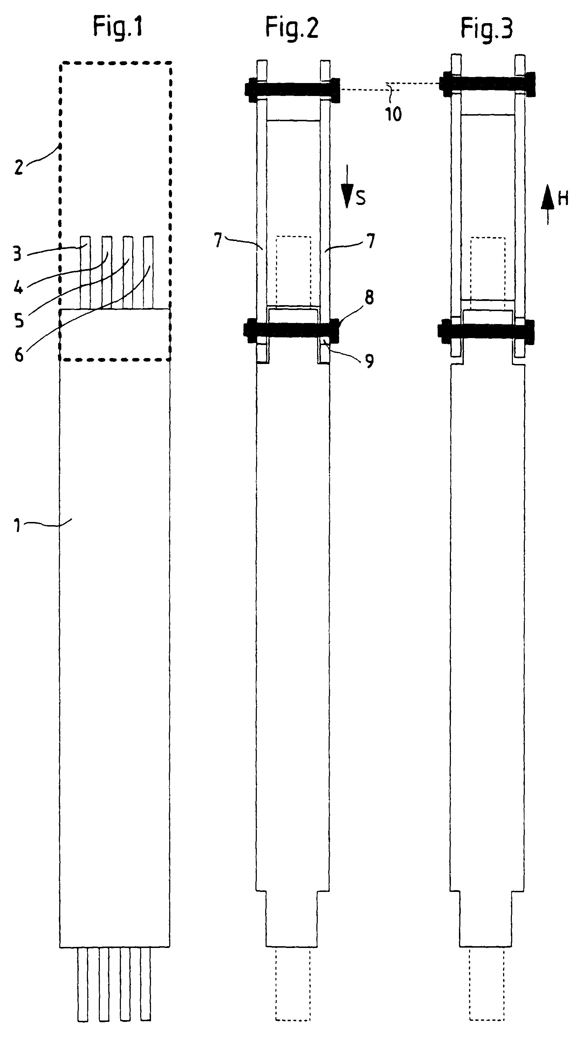

Die Fig. 1 zeigt eine schematische Darstellung eines Schienenabschnittes 1 mit den Stromschienen 3, 4, 5, 6 und der zugehörigen gestrichelt angedeuteten Verbindungsvorrichtung 2.

Die Verbindungsvorrichtung 2 verbindet die einzelnen Schienenabschnitte 1 elektrisch und mechanisch. Eine derartige Verbindungsvorrichtung 2 kann beispielsweise eine in der deutschen Patentschrift 35 02 864 beschriebene Vorrichtung sein.

Diese weist Flansche 7 bzw. eine Haube auf, wie in der Fig. 2 zu erkennen ist und verbindet mittels Verbindungsschrauben 8 die zwei Schienenabschnitte mechanisch miteinander. Die Bohrungen 9 an den Flanschen 7, die mit den Verbindungsschrauben 8 korrespondieren, sind etwas größer als der Durchmesser der Verbindungsschrauben 8, wodurch ein Bewegungsspiel 10 vorhanden ist. Dieses Bewegungsspiel 10 ist aus den Figuren 2 und 3 ersichtlich.

In der Fig. 2 stützen sich die Verbindungsvorrichtung 2 und der Schienenabschnitt 1 durch ihr Eigengewicht auf. Dieses ist durch einen nach unten gerichteten Pfeil S angedeutet.

In der Fig. 3 dagegen ist der Schienenabschnitt 1 hängend an der Verbindungsvorrichtung 2 angeordnet, was durch einen nach oben gerichteten Pfeil H in den folgenden Figuren 4 bis 7 vereinfacht dargestellt ist.

Im folgenden soll anhand der Figuren 4 bis 7 beispielhaft das Verfahren zur Montage der Schnienenabschnitte und der Stützvorrichtung 11 näher erläutert werden. Die Stützvorrichtung 11 wird anhand der Figuren 8 bis 13 später beschrieben.

Zunächst soll davon ausgegangen werden, daß der unterste Schienenabschnitt 1 mit einer Stützvorrichtung 11a versehen ist, wie die Fig. 4 grob schematisch zeigt und daß weitere Schienenabschnitte 12 bis 14 bereits auf dem untersten aufliegen, jedoch, ohne daß die dazwischen liegenden Verbindungsvorrichtungen 23 und 24 kraftschlüssig mit den Schienenabschnitten 12 bis 14 verbunden sind, also die Verbindungsschauben 8 (Fig. 2) festgedreht sind.

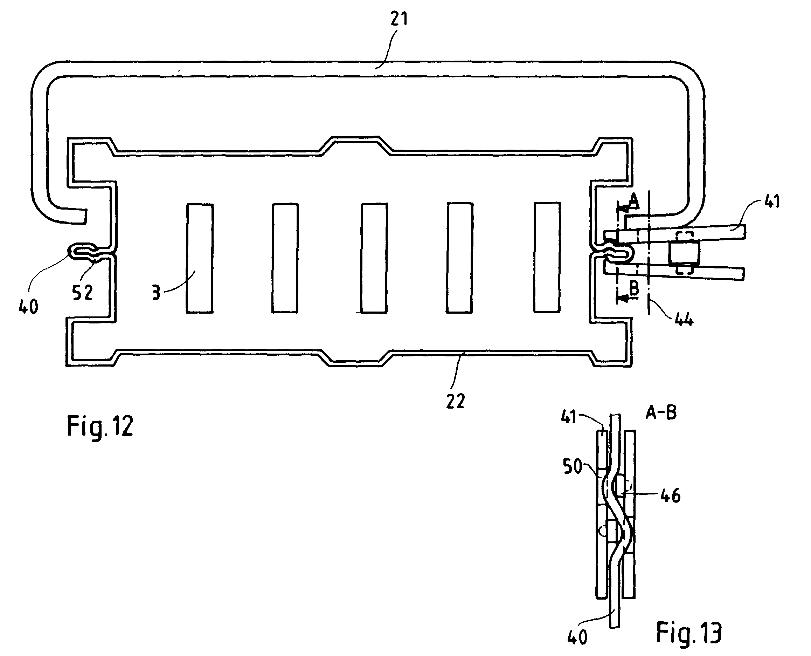

Im nächsten Schritt (Fig. 5) wird eine weitere Stützvorrichtung llb auf dem obersten Schienenabschnitt 14 angebracht. Es sind allerdings ein oder mehrere Einstellehren 19 zwischen den Auflageflächen 17 und 18 der Stützvorrichtung 11 bzw. 11b angeordnet, wobei die erste Auflagefläche 17 mit einen Klemmenhalter (21) fest verbunden ist, der eine Klemme (28) zur Klemmung des Schienengehäuses 22 (Fig. 12) aufweist und die zweite Auflagefläche 18 des Winkels 20 mit dem an der Wand oder dem Boden des Gebäudes befestigten Träger fest verbunden ist. Wie aus der Pfeilrichtung der Pfeile in Fig. 5 zu erkennen ist, stützen sich noch alle Schienenabschnitte 12 bis 14 hauptsächlich auf dem untersten Schienenabschnitt 1 auf.

Die Fig. 6 zeigt den nächsten Schritt, in dem die Einstellehren zu entfernen sind und die Befestigungsschraube 27, die den Winkel 17 und den Klemmenhalter 21 verbindet, angezogen wird. Hierbei sind die Einstellehren 19 derart abgestimmt, daß eine bestimmte Anzahl von Schienenabschnitten sich nicht mehr auf dem unteren Schienenabschnitt stützen, sondern an dem darüberliegenden hängend angeordnet sind, was gleichbedeutend mit einer Entlastung der unteren Stützvorrichtung bzw. Entkopplung ist.

Es ist in der Fig. 5 durch die horizontalen und gestrichelten Linien zu erkennen, daß in diesem Fall der Schienenabschnitt 14 gegenüber der Fig. 5 nach oben bewegt worden ist und zwar etwa um die Höhe der Einstellehren 19.
Der Schienenabschnitt 13 hängt nun an dem Schienenabschnitt 14, wie durch den nach oben gerichteten Pfeil neben der Verbindungsvorrichtung 24 angedeutet ist und belastet daher jetzt die Stützvorrichtung 11b, ist also mechanisch entkoppelt.

Die mechanische Entkopplung wird nahezu vollständig erreicht, wenn die elektrische Verbindung z.B. mittels mäanderförmigen Paketen aus Metallbändern hergestellt wird, die in der DE-PS 35 02 864 erläutert sind.

Die Verbindungsschrauben 8 können nachfolgend kraftschlüssig verspannt werden.

Im Anschluß können weitere Schienenabschitte 15 und 16 montiert und die vorhergehenden Schritte wiederholt werden (Fig. 7).

Einer Stützvorrichtung 11 können ohne weiteres mehr als drei Schienenabschnitte zugeordnet werden, die sich entweder abstützen oder hängend angeordnet sein können.

Die in der Fig. 8 gezeigte Stützvorrichtung 11 besteht aus zwei Klemmen 28, einem C-förmigen Klemmenhalter 21, zwei Winkeln 20, einer Platte 29, und ggf. zwei Bodenbefestigungswinkeln 30.

Die Stützvorrichtung 11 kann wahlweise zur Bodenmontage mit den Bodenbefestigungswinkeln 30 oder zur Wandbefestigung, nur mit den Winkeln 20 und ohne die Befestigungswinkel 30, eingesetzt werden.

Die Winkel 20 weisen einen zur Gebäudewand parallelen Abschnitt 31 und einen um 90 Winkelgrade versetzten weiteren Abschnitt 32.

Der Abschnitt 31 ist mit Löchern 35 zur Wandbefestigung und zur Fixierung mittels einer Platte 29 versehen.
An der Platte 29 sind Fixierungsabschnitte 34 einstückig mit dieser verbunden, die die Abschnitte 31 der Winkel 20 im Bereich der Löcher 35 hintergreifen. Durch das Verschrauben der Winkel 20 mit den Fixierungsabschnitten 34 wird leicht die richtige Position der Winkel eingestellt.

Ferner ist die Platte 29 in der Mitte mit Einkerbungen 33 oder Markierungen versehen, um mit Hilfe eines Lotes eine optimale Montage zu erreichen.

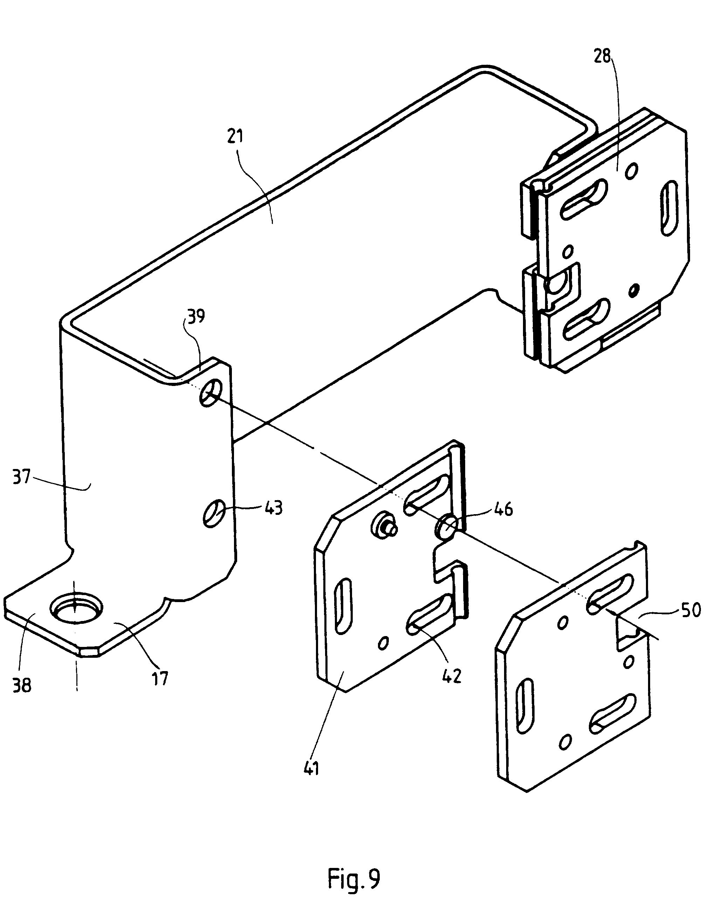

Der Abschnitt 32 dient als Stütze für den Klemmenhalter 21. Dieser ist mit einem Langloch 36 versehen, in dem eine in der Fig. 8 nicht dargestellte Befestigungsschraube 27 (Fig. 6) geführt ist, die den Klemmenhalter 21 trägt und zwar derart, daß die erste Auflageflächen 17 der an den Seitenschenkeln 37 (Fig. 9) des Klemmenhalters 21 rechtwinkelig angeformten Abschnitte 38 unterhalb der Abschnitte 32, bzw. der zweiten Auflageflächen 18, der Winkel 20 liegen. Dies bedeutet, daß beim Festdrehen der Befestigungsschraube 27 der Klemmenhalter 21 nach oben bewegt wird.

Zwischen diesen ersten und zweiten Auflageflächen 17 und 18 kommen die Einstellehren zum Einsatz.

Der Abstand des Schienenkanals zur Gebäudewand wird durch das Verstellen des Klemmenhalters 21 entlang der Langlöcher 36 bewirkt.

Die Klemmen 28 sind an den parallel zur Gebäudewandebene liegenden Schenkeln 39 befestigt (Fig. 9) und greifen und halten das Schienengehäuse 22 jeweils an einer Falz 40, die an den Schmalseiten des Schienengehäuses 22 angeordnet sind, wie in den Figuren 12 und 13 dargestellt ist.

Die in den Figuren 8 und 9 dargestellten Klemmen 28 bestehen aus zwei gleichen Klemmenhälften 41 (Fig. 9 und 10). Diese weisen Langlöcher 42 zur Befestigung an dem Klemmhalter 21 und zur Ausübung der Klemmkraft mittels durch die Löcher 42 und 43 ragende, in der Fig. 13 angedeutet dargestellte Schrauben 44 auf.

Jede Klemmenhälfte 41 ist mit einem zylinderscheibenartigen Teil 45 mit jeweils an den gegenüberliegenden Seiten liegenden ersten und zweiten Zapfen 47, 48 zur Fixierung zwischen den zwei Klemmenhälften 41 versehen, wodurch beide Klemmenhälften eine Klemmung ausführen können.

In dem zum Schienengehäuse zugewandten Bereich der Klemme 28 ist jeweils an den Klemmenhälften ein weiteres zylinderscheibenartiges zweites Teil 46 jedoch mit nur einem ersten Zapfen 49 zur Fixierung angeordnet. Dieser dient zum Hereindrücken der Falz 40 in einem Einschnitt 50 der Klemmenhälfte 44, wie in der Fig. 13 näher dargestellt ist. Weil zwei spiegelbildlich asymmetrisch angeordnete Klemmenhälften 41 vorhanden sind, wird die Falz 40 etwa leicht S-förmig gebogen, was ein Abrutschen der Klemme 28 entlang der Falz 40 verhindert.

Die Höhe des zylinderscheibenartigen zweiten Teiles 46 ist etwa um ein Drittel geringer als die des ersten Teiles 45 und der zweite Zapfen 48 im Durchmesser kleiner als der erste Zapfen 47.

Ferner ist in diesem Bereich eine Nut 51 vorhanden, die dazu dient, einen Höcker 52 der Falz 52 aufzunehmen.

Das Schienengehäuse 22 ist in der DE-OS 34 37 586 näher erläutert.

## Patentansprüche

1. Stützvorrichtung zur Abstützung von vertikal angeordneten Schienenabschnitten (1, 12-16) von Schienenverteilern, insbesondere Niederspannungs-Schienenverteilern, **dadurch gekennzeichnet,** daß die Stützvorrichtung aus einem Klemmenhalter (21) mit einer ersten Auflagefläche (17) sowie einem an der Wand oder am Boden befestigbaren Träger besteht, der eine zweite Auflagefläche (18) aufweist, daß im montierten Zustand der Stützvorrichtung die erste Auflagefläche (17) unter der zweiten Auflagefläche (18) angeordnet ist, daß die Stützvorrichtung nachträglich entfernbare Einstellehren (19) zum Zwecke des Entkoppelns von Schienenabschnitten aufweist, wodurch im montierten Zustand eine Entlastung der darunterliegenden Stützvorrichtungen eintritt und daß Befestigungsschrauben vorhanden sind, die die ersten und zweiten Auflageflächen (17, 18) bis zur gegenseitigen Anlage bewegen.

2. Stützvorrichtung nach Anspruch 1, dadurch gekennzeichnet, daß die erste Auflagefläche (17) einem mit dem Schienengehäuse (22) mittels Klemmen (28) befestigten Klemmenhalter (21) zugeordnet ist.

3. Stützvorrichtung nach Anspruch 1 oder 2, dadurch gekennzeichnet, daß der Klemmenhalter (21) C-förmig ist.

4. Stützvorrichtung nach einem der vorhergehenden Ansprüche, dadurch gekennzeichnet, daß die Klemmen (28) mit für die Klemmung des Schienengehäuses (22) und Befestigung an dem Klemmenhalter (21) gemeinsamen Schrauben versehen sind.

5. Stützvorrichtung nach einem der vorhergehenden Ansprüche, dadurch gekennzeichnet, daß die Klemmen (28) aus zwei gleichen Klemmenhälften (41) bestehen.

6. Stützvorrichtung nach einem der vorhergehenden Ansprüche, dadurch gekennzeichnet, daß im zusammengesetzten Zustand zwischen den Klemmenhälften (41) in dem mittleren Bereich mindestens ein erstes Teil (45) als Distanzstück vorhanden ist, wodurch beim Anziehen der Klemmschraube eine Klemmung möglich wird.

7. Stützvorrichtung nach Anspruch einem der vorhergehenden Ansprüche, dadurch gekennzeichnet, daß die Klemmenhälften (41) in dem schienengehäuseseitigen Bereich mit mindestens einem Teil (46) versehen sind, daß in diesem Bereich mindestens ein Einschnitt (50) vorhanden ist und daß jeweils das Teil (46) mit dem Einschnitt (50) der gegenüberliegenden Klemmenhälfte fluchtet.

8. Stützvorrichtung nach einem der vorhergehenden Ansprüche, dadurch gekennzeichnet, daß die ersten und zweiten Teile (45) und (46) rotationssymmetrisch sind.

9. Stützvorrichtung nach einem der einem der Ansprüche 6 bis 8, dadurch gekennzeichnet, daß die ersten Teile (45) und die zweiten Teile (46) Zapfen (47,48,49) zum Zwecke der Fixierung an den Klemmenhälften (41) aufweisen.

10. Stützvorrichtung nach einem der einem der vorhergehenden Ansprüche, dadurch gekennzeichnet, daß mindestens eine Falz (40) des Schienengehäuses (22) mittels der Klemmen (28) festgeklemmt wird .

11. Stützvorrichtung nach einem der vorhergehenden Ansprüche, dadurch gekennzeichnet, daß die zweite Auflagefläche (18) mindestens einem Winkel (20) zugeordnet ist.

12. Stützvorrichtung nach einem der vorhergehenden Ansprüche, dadurch gekennzeichnet, daß der Winkel (20) in einem zur Gebäudenbodenebene parallelen Abschnitt (32) mindestens ein Langloch (36) aufweist, durch das der Klemmenhalter (21) verschiebbar ist.

13. Stützvorrichtung nach einem der vorhergehenden Ansprüche, dadurch gekennzeichnet, daß die Winkel (20) mit einem zur Gebäudewandebene parallelen Abschnitt (31) versehen ist, der Löcher (35) zur Wandbefestigung aufweist.

14. Stützvorrichtung nach einem der vorhergehenden Ansprüche, dadurch gekennzeichnet, daß die Winkel (20) mittels einer Platte (29) fixiert werden.

15. Stützvorrichtung nach Anspruch 14, dadurch gekennzeichnet, daß die Platte (29) Fixierungsabschnitte (34) aufweist, die die Abschnitte (31) im Bereich der Löcher (35) hintergreifen.

16. Stützvorrichtung nach einem der Ansprüche 14 oder 15, dadurch gekennzeichnet, daß die Platte (29) Einkerbungen oder Markierungen für ein Lot aufweist.

17. Stützvorrichtung nach einem der Ansprüche 11 bis 16, dadurch gekennzeichnet, daß im Falle einer Bodenbefestigung Bodenbefestigungswinkel (30) mit dem Winkel (20) festgelegt sind.

18. Stützvorrichtung nach Anspruch 8, dadurch gekennzeichnet, daß die ersten und zweiten Teile (45) und (46) zylinderscheibenartig sind und daß die Höhe des zylinderscheibenartigen zweiten Teiles (46) etwa um die Hälfte bis ein Drittel geringer ist als die des ersten Teiles (45).

19. Stützvorrichtung nach Anspruch 9, dadurch gekennzeichnet, daß der Zapfen (48) im Durchmesser kleiner als der Zapfen (47) ist.

20. Stützvorrichtung nach Anspruch 10, dadurch gekennzeichnet, daß an den Klemmen (28) zur Klemmung des Schienengehäuses (22) in diesem Bereich mindestens eine Nut (51) vorhanden ist, die einen am Schienengehäuses (22) angeordneten Höcker (52) aufnimmt.

21. Verfahren zur Montage von vertikal angeordneten Schienenabschnitten (1,12-16) von Schienenverteilern, insbesondere Niederspannungs-Schienenverteilern, unter Verwendung der Stützvorrichtung gemäß einem der vorangehenden Patentansprüche, gekennzeichnet durch folgende Montageschritte:
a) Aufsetzen von mindestens einem Schienenabschnitt (12, 13, 14) und Verbinden der Schienenabschitte (1, 12, 13, 14) mit Verbindungs vorrichtungen (2, 23, 24), wobei Befestigungsmittel, wie Befestigungsschrauben von Flansche der Verbindungsvorrichtungen (2, 23, 24) locker bleiben, so daß noch ein Bewegungsspiel (10) an den Verbindungsstellen vorhanden ist (Fig. 4),
b) Befestigen mindestens einer Stützvorrichtung (11b) an das Schienengehäuse (22) des Schienenabschnittes (14) mit einer oder mehreren zwischen den Auflageflächen (17, 18) liegenden Einstellehren (19), wobei alle Schienenabschnitte (12, 13), die unterhalb des Schienenabschnittes (14), welches mit der Stützvorrichtung (11b) verbunden ist, sich an dem untersten Schienenabschnitt (1) abstützen (Fig. 5),
c) Entfernen der Einstellehren (19) und Anziehen der Befestigungsschrauben (27) (Fig. 6), wodurch die Auflageflächen (17, 18) bis zur gegenseitigen Anlage zueinander bewegt werden, wobei hierdurch eine durch die Einstellehren (19) definierte Anzahl von Schienenabschnitten (13) unterhalb der Stützvorrichtung (llb) an dieser Stützvorrichtung (11b) hängen und nicht, wie im vorhergehenden Verfahrensschritt (Fig. 5), sich an dem untersten Schienenabschnitt (1) abstützen,
d) Anordnen weiterer Schienenabschnitte (15, 16) und Wiederholen der vorhergehenden Verfahrensschritte (Fig. 4 bis 6), bis die gewünschte Schienenlänge erreicht ist.

## Claims

1. Support device allowing the support of vertically arranged bar sections (1, 12-16) in bar distributors and especially in low-voltage bar distributors, **wherein** the support device consists of a clamp holder (21) with a first resting surface (17) and of a carrier which can be fixed to the wall or to the bottom and which presents a second resting surface (18), wherein the first resting surface (17) is arranged below the second resting surface (18) in the assembled condition, wherein the support device presents adjusting jigs (19) which are used for the purpose of decoupling bar sections and which can be removed later on, thus bringing about a relief of the support devices situated below in the assembled condition, and wherein fixing screws are provided which move the first and second resting surfaces (17, 18) until they come to rest against one another.

2. Support device as claimed in claim 1, wherein the first resting surface (17) is associated with a clamp holder (21) which is fixed to the bar casing (22) by means of clamps (28).

3. Support device as claimed in claim 1 or 2, wherein the clamp holder (21) is C-shaped.

4. Support device as claimed in any of the above-mentioned claims, wherein the clamps (28) are provided with screws used in common both for the clamping of the bar casing (22) and for the fixing to the clamp holder (21).

5. Support device as claimed in any of the above-mentioned claims, wherein the clamps (28) consist of two identical half clamps (41).

6. Support device as claimed in any of the above-mentioned claims, wherein at least one first element (45) is provided as a spacer in the central section between the half clamps (41) in the assembled condition, allowing the clamping action to be take place when the clamping screw is tightened.

7. Support device as claimed in any of the above-mentioned claims, wherein the half clamps (41) are provided with at least one element (46) located in the section at the side of the bar casing, wherein at least one cut (50) is provided in this section and wherein each element (46) is aligned with the cut (50) in the opposite half clamp.

8. Support device as claimed in any of the above-mentioned claims, wherein the first and the second elements (45) and (46) are rotationally symmetrical.

9. Support device as claimed in any claim 6 through 8, wherein the first elements (45) and the second elements (46) present pins (47, 48, 49) for the purpose of fixing to the half clamps (41).

10. Support device as claimed in any of the above-mentioned claims, wherein at least one fold (40) of the bar casing (22) is clamped by means of clamps (28).

11. Support device as claimed in any of the above-mentioned claims, wherein the second resting surface (18) is at least associated with one angle (20).

12. Support device as claimed in any of the above-mentioned claims, wherein the angle (20) presents at least one slot (36) located in a section (32), running in parallel with regard to the plane of the casing bottom, and wherein the clamp holder (21) can be displaced across this slot (36).

13. Support device as claimed in any of the above-mentioned claims, wherein the angles (20) are provided with a section (31), running in parallel with regard to the plane of the casing wall, and presenting holes (35) for wall fixing.

14. Support device as claimed in any of the above-mentioned claims, wherein the angles (20) are fixed by means of a plate (29).

15. Support device as claimed in claim 14, wherein the plate (29) presents fixing sections (34) which extend behind the sections (31) in the area of the holes (³⁵).

16. Support device as claimed in any claim 14 or 15, wherein the plate (29) presents notches or marks for a perpendicular.

17. Support device as claimed in any claim 11 through 16, wherein bottom fixing angles (30) are fixed with the angle (20) in the case of bottom fixing.

18. Support device as claimed in claim 8, wherein the first and second elements (45) and (46) are similar to cylindrical disks and wherein the height of the second element (46), which is similar to a cylindrical disk, is approximately by between one half and one third lower than the height of the first element (45).

19. Support device as claimed in claim 9, wherein the pin (48) has a smaller diameter than the pin (47).

20. Support device as claimed in claim 10, wherein at least one groove (51) is provided at the clamps (28) for the clamping of the bar casing (22) in this area and wherein this groove (51) receives a hump (52) arranged on the bar casing (22).

21. Process allowing the assembly of vertically arranged bar sections (1, 12-16) in bar distributors and especially in low-voltage bar distributors, using the support device in accordance with any of the above-mentioned claims and characterised by the following steps of assembly:
a) Place at least one bar section (12, 13, 14) and connect the bar sections (1, 12, 13, 14) with connecting devices (2, 23, 24) while such means of fastening as the fixing screws for the flanges of the connecting devices (2, 23, 24) remain loose in such a way as to allow free motion (10) at the connecting points (see figure 4),
b) Fasten at least one support device (11b) to the bar casing (22) of the bar section (14) using one or several adjusting jigs (19) being located between the resting surfaces (17, 18), while all bar sections (12, 13), situated below the bar section (14) which is linked with the support device (11b), rest upon the lowest bar section (1) (see figure 5),
c) Remove the adjusting jigs (19) and tighten the fastening screws (27) (see figure 6), thus moving together the resting surfaces (17, 18) until they come to rest against one another; in this way, a number of bar sections (13) defined by the adjusting jigs (19) and located below the support device (11b) will hang from this support device (11b) rather than rest upon the lowest bar section (1) as in the previous step of the procedure (see figure 5),
d) Arrange additional bar sections (15, 16) and repeat above-mentioned steps of the procedure (figures 4 through 6) until the desired bar length is achieved.

## Revendications

1. Dispositif de support pour l'appui de segments de barres de canalisations préfabriquées - en particulier canalisations préfabriquées à basse tension - disposés verticalement, **caractérisé en ce que** le dispositif de support consiste en un porte-bornes (21) avec une première surface de repos (17) ainsi qu'un support fixable sur le mur ou au sol, ledit support présentant une seconde surface de repos (18), tel qu'en état monté du dispositif de support la première surface de repos (17) est disposée sous la seconde surface de repos (18), et qu'en suite de quoi le dispositif de support présente des calibres d'ajustage (19) démontables dans le but de découpler les segments de barres, par quoi est obtenue, en état monté, une décharge des dispositifs de supports sous-jacents; et tel que des vis de fixation sont disposées, lesquelles impriment un mouvement à la première et à la seconde surface de repos (17,18) jusqu'à leur mise en position réciproque.

2. Dispositif de support selon la revendication 1, **caractérisé en ce qu'**à la première surface de repos (17) est adjoint un porte-bornes (21) fixé au coffret à barres (22) au moyen de bornes (28).

3. Dispositif de support selon la revendication 1 ou 2, **caractérisé en ce que** le porte-bornes (21) est en forme de C.

4. Dispositif de support selon l'une des revendications précédentes, **caractérisé en ce que** les bornes (28) sont munies de vis communes pour l'assemblage du coffret à barres (22) et la fixation sur le porte-bornes (21).

5. Dispositif de support selon l'une des revendications précédentes, **caractérisé en ce que** les bornes (28) sont constituées de deux moitiés de bornes (41) identiques.

6. Dispositif de support selon l'une des revendications précédentes, **caractérisé en ce qu'**en état assemblé, au moins une première pièce (45) est disposée comme pièce intercalaire dans la zone intermédiaire entre les moitiés de borne (41), par laquelle un assemblage est rendu possible par serrage des vis de borne.

7. Dispositif de support selon l'une des revendications précédentes, **caractérisé en ce que** les moitiés de bornes (41) sont munies d'au moins une pièce (46) dans la zone latérale du coffret à barres; que dans cette zone soit disposée au moins une encoche (50), et que la pièce (46) correspondante soit alignée sur l'encoche (50) de la moitié de borne qui lui fait face.

8. Dispositif de support selon l'une des revendications précédentes, **caractérisé en ce que** les premières (45) et secondes pièces (46) sont à symétrie de révolution.

9. Dispositif de support selon l'une des revendications 6 à 8, **caractérisé en ce que** les premières (45) et les secondes pièces (46) présentent des tourillons (47,48,49) destinés à la fixation sur les moitiés de bornes (41).

10. Dispositif de support selon l'une des revendications précédentes, **caractérisé en ce qu'**au moins un tenon (40) du coffret à barres (22) soit enserré par les bornes (28).

11. Dispositif de support selon l'une des revendications précédentes, **caractérisé en ce que** la seconde surface de repos (18) soit adjointe à une équerre (20) au moins.

12. Dispositif de support selon l'une des revendications précédentes, **caractérisé en ce que** l'équerre (20) présente au moins une ouverture longitudinale (36) sur un segment (32) parallèle au plan du sol du bâtiment, ouverture dans laquelle le porte-bornes (21) est insérable.

13. Dispositif de support selon l'une des revendications précédentes, **caractérisé en ce que** l'équerre (20) est munie d'un segment (31) parallèle au plan du mur du bâtiment, ledit segment présentant des ouvertures (35) destinées à la fixation au mur.

14. Dispositif de support selon l'une des revendications précédentes, **caractérisé en ce que** les équerres (20) sont fixées au moyen d'une plaque (29).

15. Dispositif de support selon revendication 14, **caractérisé en ce que** la plaque (29) présente des segments de fixation (34), lesquels ont prise derrière les segments (31) dans la zone des ouvertures (35).

16. Dispositif de support selon l'une des revendications 14 ou 15, **caractérisé en ce que** la plaque (29) présente des rainures ou des marquages pour un fil à plomb.

17. Dispositif de support selon l'une des revendications 11 à 16, **caractérisé en ce que** des équerres de fixation au sol (30) sont fixées à l'équerre (20) pour le cas d'une fixation au sol.

18. Dispositif de support selon revendication 8, **caractérisé en ce que** les premières (45) et secondes pièces (46) sont en forme de disques cylindriques, et que la hauteur de la seconde pièce (46) en forme de disque cylindrique soit inférieure de moitié, ou jusqu'à un tiers environ, à celle de la première pièce (45).

19. Dispositif de support selon revendication 9, **caractérisé en ce que** le tourillon (48) a un diamètre inférieur à celui du tourillon (49).

20. Dispositif de support selon revendication 10, **caractérisé en ce qu'**une rainure au moins (51) est disposée sur les bornes (28) dans cette zone à fin d'assemblage du coffret à barres (22), ladite rainure étant pour l'engagement d'une bosse (52) sur le coffret de boîtier (22).

21. Procédure de montage des segments de barres de canalisations préfabriquées - en particulier canalisations préfabriquées à basse tension - disposés verticalement, en appliquant le dispositif de support selon l'une des revendications précédentes, **caractérisé par** les étapes de montages suivantes:
a) Pose d'au moins un segment de barre (12, 13, 14) et raccord des segments de barres (1, 12, 13, 14) au moyen de dispositifs de raccord (2, 23, 24), de sorte que les moyens de fixation, tels que vis de fixation de la bride des dispositifs de raccord (2, 23, 24) restent desserrés, de sorte encore que soit assuré un jeu de mouvement (10) aux endroits de raccord (fig. 4).
b) Fixer au moins un dispositif de support (11 b) au coffret (22) du segment de barres (14) au moyen d'un ou de plusieurs calibres d'ajustage (19) disposés entre les surfaces de repos (17, 18), par quoi tous les segments de barres (12, 13) situés sous le segment de barre (14) lui-même relié au dispositif de support (11 b), s'appuient sur le segment de barre inférieur (1) (fig. 5).
c) Retirer les calibres d'ajustage (19) et serrer les vis de fixation (27) (fig. 6), par quoi les surfaces de repos (17, 18) sont déplacées l'une vers l'autre jusqu'à leur mise en position réciproque, et par quoi un nombre de segments de barres (13) déterminé par les calibres d'ajustage (19) sont raccrochés au dispositif de support (11b) au-dessous de celui-ci, et ce s'appuient pas sur le segment de barre (1) le plus bas, comme lors de l'étape précédente de procédure (fig. 5).
d) Disposition de segments de barres supplémentaires (15, 16) et répétition des étapes de procédure précédentes (fig. 4 à 6), jusqu'à ce que la longueur de barre souhaitée soit obtenue.
